# EUROPEAN PATENT SPECIFICATION

(11) **EP 1 410 352 B1**
(45) Date of publication and mention of the grant of the patent: **06.09.2006**
(21) Application number: 01957958.0
(22) Date of filing: 12.07.2001
(51) Int. Cl.: G07F 19/00, G07F 7/02

(54) **Method for online purchasing with high operating security**
Verfahren zum Online-Einkaufen mit hoher Betriebssicherheit
Procédé d'achat en ligne fonctionnant avec un haut niveau de sécurité

(30) Priority: 19.07.2000 IT MI20001642
(43) Date of publication of application: 21.04.2004
(73) Proprietor: DTS S.R.L., 80100 Napoli (IT)
(72) Inventor: TARABBO, Francesco, I-80127 Napoli (IT)
(74) Representative: Modiano, Micaela Nadia
(86) International application number: PCT/EP2001/008061
(87) International publication number: WO 2002/007116

(56) References cited:
- WO-A-00/02150
- WO-A-00/33497
- WO-A-98/25237
- WO-A-99/49424
- US-A- 5 883 810

## Description

### Technical field

The present invention relates to a method for online purchasing with high operating security. More particularly, the invention relates to a method for online purchasing with high operating security such as for example purchasing over the Internet.

### Background art

It is known that trade with online payments and purchases performed by using a credit card is developing more and more, especially thanks to the diffusion of data communications networks such as the Internet, which hosts a very large number of companies which can offer their products at competitive prices and promote purchases performed directly online by using a credit card.

However, a limitation to the growth of such electronic commerce is the very fact that the user, in order to be able to make the purchase, must enter his credit card number online in order to complete the purchase.

The fact of having to transmit one's credit card number over data communication networks raises considerable doubt among users, who fear, sometimes justifiably, that their credit card number can be intercepted fraudulently and used by ill-intentioned people to make unauthorized purchases, charging them to the current account of the legitimate user who owns the card.

Therefore, when the user is faced with the need to enter his credit card number in an electronic form prepared by the service operator or goods retailer over a data communications network, he is not encouraged by unshakable confidence in the encryption system that the operator can offer, and therefore, even if he makes his purchase, he does not feel sufficiently protected as regards the secrecy of his data.

However, the basic tool for being able to make purchases online is certainly the credit card, owing to its method of use, and therefore the growth of electronic commerce and online commerce in general is increasingly linked to this tool.

Furthermore, even if the operator of the service proposes a data encryption system, so that the data cannot be read by third parties, it is known that encryption by means of any public or private key is subject to decryption, even though this requires a significant amount of time.

All the systems currently used to protect transactions performed online by using the code of a credit card entail, in the best cases, an encryption which however does not ensure absolute inviolability of the data.

US 5,883,810 discloses an online commerce system in which a card is issued electronically to a customer for assigning a permanent customer account number. The customer obtains a transaction number resembling a credit card number for use in a single transaction by means of a wizard software installed on his computer.

WO00/02150 discloses a system for conducting a remote financial transaction between a customer and a merchant in which a transaction code relating to a particular transaction is created based on a Passcode, an existing credit/debit card or account number, a Merchant Code identifying the merchant and a limit amount for the transaction.

### Disclosure of the Invention

The aim of the present invention is to provide a method for online purchasing with high operating security which allows to ensure the substantial inviolability of the data of the transaction performed by the user.

Within this aim, an object of the present invention is to provide a method for online purchasing with high operating security which allows to render unusable, after a preset period of time, any data of the transaction that might be intercepted fraudulently by third parties.

Another object of the present invention is to provide a method for online purchasing with high operating security which allows to ensure the anonymity of the purchase made online.

Another object of the present invention is to provide a method for online purchasing with high operating security which is highly reliable, relatively simple to provide and at competitive costs.

This aim and these and other objects which will become better apparent hereinafter are achieved by the method of claim 1.

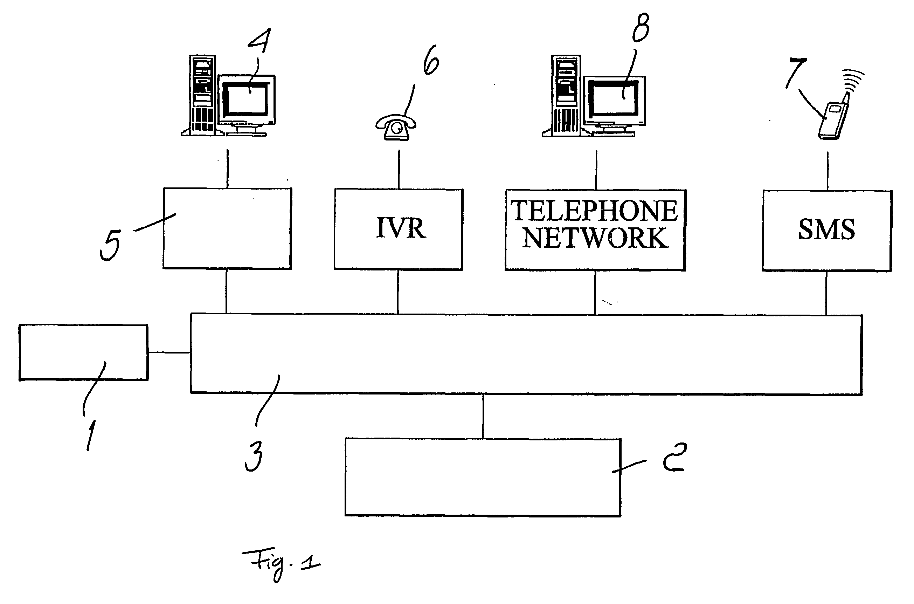

### Brief description of the drawing

Further characteristics and advantages of the invention will become better apparent from the description of preferred but not exclusive embodiments of the method according to the invention, wherein the only figure is a block diagram of the architecture of the system used to implement the method according to the present invention.

### Ways of carrying out the Invention

With reference to the figure, the method according to the present invention provides for the following steps.

First of all, a first card is provided which bears a code which, together with the entry of a PIN (Personal Identification Number), allows to activate said card.

Substantially, the issuer of said cards, which is designated by the reference numeral 1 in the figure, by way of a connection to the banking network 2, generates a virtual account 3 which the user has available for making online purchases by means of said card.

The method uses a second card, of the disposable type, which contains a secret code which allows to transfer onto the virtual account 3 a monetary value which corresponds to the sum paid by the user to purchase the disposable card.

The method then entails a first step, in which the user purchases a card, which bears a code applied thereto in a visible manner and with a PIN, and a second card, of the disposable type, which bears a secret code and allows to recharge the virtual account 3 of the user.

The second step of the method according to the invention entails activating the card with the security PIN and transferring a monetary value selected by the user onto his virtual account by means of the disposable card that contains the secret code.

At this point, when the user has to make an online purchase, for example from the Internet, and therefore already knows the amount to be spent, he contacts the card issuer 1 for example by means of the following systems:
-- by opening a new window, designated by the reference numeral 5, on the personal computer 4;
-- over a telephone 6;
-- over a cellular telephone 7 (for example with SMS-type messages);
-- over terminals 8 connected to the telephone network (for example over the POS circuit).

Once the user has contacted the card issuer 1, he enters the number provided on the card in a visible manner and the corresponding PIN. Upon receiving these data, the system confirms them and reports the residual credit available on the virtual account 3 in the name of the user who entered the card number.

At this point the user enters the amount that he intends to spend to purchase the goods or service, which must therefore be deducted from the virtual account 3.

The system compares the amount (on the virtual account) with the amount that the user has entered, which corresponds to the amount of the goods or service that he wishes to spend.

Once the operation has been confirmed, the user is sent over the banking network 2 a virtual credit card code with a very specific expiry date which is generally very close.

This information is provided to the user, for example, if requested, in encrypted form. The secret virtual credit card number is decrypted on the user's personal computer before being able to proceed with the purchase by using the secret code sent by the banking network.

In the final operation, the user enters the virtual credit card code received from the banking network in the specific online purchase screen. The site then performs the purchase transaction toward the user's bank for verification and approval.

At this point the user can print a copy of the purchase to be used as a receipt of payment.

Shortly after the user has entered on the network the virtual credit card code sent to him over a data communications system in encrypted form, said code is automatically canceled, thus rendering useless any interception of the code on the part of ill-intentioned persons.

Practically, the user first of all does not report his personal data, such as his name and surname, on the network, thus achieving complete anonymity of the purchase, and secondly the code that he enters on the network is not the code that is present on the card that he physically owns, which actually must be activated by knowing the PIN, but is a code which is sent to the user by the banking network 2 and which, in addition to being encrypted, has a very specific limited duration.

In any case, the cancellation of the code sent by the banking network immediately after the purchase made by the user makes said code unusable.

The method according to the invention thus allows to perform absolutely inviolable online payment transactions, since the user no longer sends his credit card number as occurs at present, but sends instead a code which allows to "generate" an additional code which is then sent in encrypted form to the user.

Therefore, differently from known payment systems, in which the user has to enter his credit card code and it is this code that allows direct access to his personal account, the method according to the invention entails entering a code which allows to generate an additional code, of a temporary type, which allows access to the virtual account. In each instance, i.e., for each individual transaction, the code that gives access to the virtual account of the user is changed and sent in encrypted form to the user.

Accordingly, from what has been described above it is evident that the method according to the invention ensures absolute inviolability of the data of the transaction, particularly rendering useless the fraudulent knowledge of the code issued by the banking network following the entry of the card code by the user.

It is possible to provide that a different card, with a code and a PIN which are new every time, must be used for each different purchase.

In this manner the user's security is guaranteed even further.

In practice it has been observed that the method according to the invention fully achieves the intended aim and objects, since it allows to perform transactions with an extremely high level of security, directly online, without having to send a credit card number and therefore actually with no need to own a credit card.

The method thus conceived is susceptible of numerous modifications and variations, all of which are within the scope of the appended claims; all the details may further be replaced with other technically equivalent elements.

## Claims

1. A method for online purchasing with high operating security, comprising the steps of:
-- providing a card which bears a code and with which a PIN for enabling said card is associated;
-- at a user's end, communicating said code and said PIN to an issuer (1) of said card in order to activate said card;
-- at the issuer's end, by way of a connection to a banking network, creating a virtual account (3) which is univocally associated with said card in response to said communicating;
-- at the user's end
-- when the user wishes to make a purchase online, contacting the card's issuer and entering the code of said card and said PIN by means of a telephone or a cellular telephone or a POS terminal, in order to have access to the virtual account;
-- receiving, following said activation, a virtual credit card number and a specific expiry date of said virtual credit card, which are sent to the user over the banking network and which give temporarily access to the virtual account;
-- entering said virtual credit card number online to make the purchase, said virtual credit card number being canceled immediately after the user has made said purchase.

2. The method according to claim 1, **characterized in that** the step of activating said card by sending said code and said PIN comprises the steps of, at the issuer's end, confirming said code and said PIN and of reporting to said user the residual credit that is available on said virtual account (3).

3. The method according to claim 1, **characterized in that** said virtual account (3) can be recharged by using a second card with a secret code.

4. The method according to claim 3, **characterized in that** said second top-up card for said virtual account (3) performs a recharging for a value equal to the purchase value of said card.

5. The method according to one or more of the preceding claims, **characterized in that** said virtual credit card number, sent to the user over a data communications network by the banking network (2), is sent in encrypted form.

6. The method according to claim 5, **characterized in that** it comprises the step of decrypting said encrypted secret code sent by the banking network (2) at the terminal (4) of the user.

7. The method according to one or more of the preceding claims, **characterized in that** said amount is compared with the balance of said virtual account (3).

8. The method according to one or more of the preceding claims, **characterized in that** the step of entering said code and said PIN of said card is performed by means of a keypad of the telephone (6, 7).

9. The method according to one or more of the preceding claims, **characterized in that** the step of entering said code and said PIN of said card is performed by means of voice recognition.

10. The method according to one or more of the preceding claims, **characterized in that** the step of entering said code and said PIN of said card is performed by means of a POS terminal (8).

11. The method according to one or more of the preceding claims, **characterized in that** after the step of entering said virtual credit card number online, the following steps are performed:
-- performing the purchase transaction with respect to the bank serving said user, for verification and approval; and
-- printing a copy of the purchase made online, as receipt of payment.

## Patentansprüche

1. Verfahren zum Online-Einkaufen mit hoher Betriebssicherheit mit den folgenden Schritten:
- Bereitstellen einer Karte, die einen Code trägt und der eine PIN zum Freigeben der Karte zugeordnet ist;
- anwenderseitiges Kommunizieren des Codes und der PIN zu einem Ausgeber (1) der Karte, um die Karte zu aktivieren;
- anwenderseitiges Erzeugen eines virtuellen Kontos (3), das unwiderruflich der Karte zugeordnet ist, mittels einer Verbindung mit einem Banknetzwerk als Antwort auf das Kommunizieren;
- anwenderseitig
- wenn der Anwender wünscht, einen Online-Einkauf zu tätigen, Kontaktieren des Kartenausgebers und Eingeben des Codes der Karte und der PIN mittels eines Telefons, eines Mobiltelefons oder eines POS-Terminals, um Zugang zu dem virtuellen Konto zu erhalten;
- Empfangen, der Aktivierung nachfolgend, einer virtuellen Kreditkartennummer und eines bestimmten Ablaufdatums der virtuellen Kreditkarte, die dem Anwender über das Banknetzwerk zugesendet werden und die zeitweiligen Zugang zu dem virtuellen Konto geben;
- Eingeben der virtuellen Kreditkartennummer online, um den Einkauf zu tätigen, wobei die virtuelle Kreditkartennummer unverzüglich gelöscht wird, nachdem der Anwender seinen Einkauf tätigte.

2. Verfahren nach Anspruch 1, **dadurch gekennzeichnet, dass** der Schritt des Aktivierens der Karte durch Senden des Codes und der PIN ausgeberseitig die Schritte des Bestätigens des Codes und der PIN und des Benachrichtigens des Anwenders über den restlichen Kredit aufweist, der auf dem virtuellen Konto (3) verfügbar ist.

3. Verfahren nach Anspruch 1, **dadurch gekennzeichnet, dass** das virtuelle Konto (3) durch Verwenden einer zweiten Karte mit einem Geheimcode wieder aufgeladen werden kann.

4. Verfahren nach Anspruch 3, **dadurch gekennzeichnet, dass** die zweite Auffüllkarte für das virtuelle Konto (3) ein wieder Aufladen um einen Wert ausführt, der gleich dem Einkaufswert der Karte ist.

5. Verfahren nach einem oder mehreren der vorstehenden Ansprüche, **dadurch gekennzeichnet, dass** die virtuelle Kreditkartennummer, die dem Anwender über ein Datenkommunikationsnetzwerk durch ein Banknetzwerk (2) zugesendet wird, in verschlüsselter Form zugesendet wird.

6. Verfahren nach Anspruch 5, **dadurch gekennzeichnet, dass** das Verfahren den Schritt des Entschlüsselns des verschlüsselten Geheimcodes aufweist, der durch das Banknetzwerk (2) an das Terminal (4) des Anwenders gesendet wird.

7. Verfahren nach einem oder mehreren der vorstehenden Ansprüche, **dadurch gekennzeichnet, dass** der Betrag mit dem Kontostand des virtuellen Kontos (3) verglichen wird.

8. Verfahren nach einem oder mehreren der vorstehenden Ansprüche, **dadurch gekennzeichnet, dass** der Schritt des Eingebens des Codes und der PIN der Karte mittels einer Tastatur des Telefons (6, 7) ausgeführt wird.

9. Verfahren nach einem oder mehreren der vorstehenden Ansprüche, **dadurch gekennzeichnet, dass** der Schritt des Eingebens des Codes und der PIN der Karte mittels Spracherkennung ausgeführt wird.

10. Verfahren nach einem oder mehreren der vorstehenden Ansprüche, **dadurch gekennzeichnet, dass** der Schritt des Eingebens des Codes und der PIN der Karte mittels eines POS-Terminals (8) ausgeführt wird.

11. Verfahren nach einem oder mehreren der vorstehenden Ansprüche, **dadurch gekennzeichnet, dass** nach dem Schritt des Eingebens der virtuellen Kartennummer online die folgenden Schritte ausgeführt werden:
- Durchführen der Einkaufstransaktion unter Bezug auf die Bank, die den Anwender bedient, zur Verifikation und Zulassung; und
- Ausdrucken einer Kopie des online getätigten Einkaufs als Quittung der Bezahlung.

## Revendications

1. Procédé pour effectuer des achats en ligne avec une grande sécurité de fonctionnement, comprenant les étapes consistant à :
- fournir une carte portant un code et à laquelle est associé un PIN pour l'activation de ladite carte ;
- du côté utilisateur, communiquer ledit code et ledit PIN à l'émetteur (1) de ladite carte afin d'activer ladite carte ;
- du côté de l'émetteur, au moyen d'une connexion avec un réseau bancaire, créer un compte virtuel (3) associé de façon univoque à ladite carte en réponse à ladite communication ;
- du côté de l'utilisateur
■ lorsque l'utilisateur désire effectuer un achat en ligne, contacter l'émetteur de la carte et saisir le code de ladite carte et ledit PIN au moyen d'un téléphone ou d'un téléphone cellulaire ou d'un terminal POS, pour avoir accès au compte virtuel ;
■ recevoir, suite à ladite activation, un numéro de carte de crédit virtuelle et une date d'expiration spécifiques à ladite carte de crédit virtuelle, qui sont envoyés à l'utilisateur par le réseau bancaire et lui donnent temporairement accès au compte virtuel ;
■ saisir ledit numéro de carte de crédit virtuelle en ligne pour effectuer l'achat, ladite carte de crédit virtuelle étant immédiatement annulée après que l'utilisateur ait fait ledit achat.

2. Procédé selon la revendication 1, **caractérisé par le fait que** l'étape d'activation de ladite carte par l'envoi dudit code et du PIN comprend les étapes suivantes, du côté de l'émetteur : la confirmation dudit code et dudit PIN et le compte-rendu audit utilisateur du crédit restant disponible sur ledit compte virtuel (3).

3. Procédé selon la revendication 1, **caractérisé par le fait que** ledit compte virtuel (3) peut être réapprovisionné en utilisant une seconde carte avec un code secret.

4. Procédé selon la revendication 3, **caractérisé par le fait que** ladite seconde carte de réapprovisionnement dudit compte virtuel (3) procède au réapprovisionnement pour une valeur égale à la valeur d'achat de ladite carte.

5. Procédé selon une ou plusieurs des revendications précédentes, **caractérisé par le fait que** le numéro de ladite carte de crédit virtuelle, envoyé à l'utilisateur par l'intermédiaire d'un réseau de communication de données par le réseau bancaire (2) est envoyé sous forme cryptée.

6. Procédé selon la revendication 5, **caractérisé par le fait qu'**il comprend l'étape de décryptage dudit code secret crypté envoyé par le réseau bancaire (2) au terminal (4) de l'utilisateur.

7. Procédé selon une ou plusieurs des revendications précédentes, **caractérisé par le fait que** ledit montant est comparé avec le solde dudit compte virtuel (3).

8. Procédé selon une ou plusieurs des revendications précédentes, **caractérisé par le fait que** l'étape de la saisie dudit code et dudit PIN de ladite carte est réalisée au moyen du clavier du téléphone (6, 7).

9. Procédé selon une ou plusieurs de revendications précédentes, **caractérisé par le fait que** l'étape de saisie dudit code et dudit PIN de ladite carte est réalisée en utilisant la reconnaissance vocale.

10. Procédé selon une ou plusieurs des revendications précédentes, **caractérisé par le fait que** l'étape consistant à saisir ledit code et ledit PIN de ladite carte est réalisée en utilisant un terminal POS (8).

11. Procédé selon une ou plusieurs des revendications précédentes, **caractérisé par le fait qu'**après l'étape de la saisie dudit numéro de carte de crédit virtuelle en ligne, les étapes suivantes sont effectuées :
- la transaction d'achat est réalisée par rapport à la banque servant ledit utilisateur, pour vérification et autorisation, et
- une copie de l'achat effectué en ligne est imprimée, en tant que reçu de paiement.
